# EUROPÄISCHE PATENTSCHRIFT

(11) **EP 0 455 056 B1**
(45) Veröffentlichungstag und Bekanntmachung des Hinweises auf die Patenterteilung: **15.02.1995**
(21) Anmeldenummer: 91106204.0
(22) Anmeldetag: 18.04.1991
(51) Int. Cl.: B65G 31/02, B65G 31/04

(54) **Einrichtung zur leitungslosen Überführung von schleuderfähigem Material von einer Aufgabestelle zu einem Bestimmungsort**
Transfer device without a conduit for materials by centrifugal force from a feeding station to a destination place
Dispositif de transfert sans conduit de produits par centrifugation d'une station d'alimentation vers un endroit de destination

(30) Priorität: 29.04.1990 DE 4013814; 09.04.1991 DE 4111357
(43) Veröffentlichungstag der Anmeldung: 06.11.1991
(73) Patentinhaber: Spies, Klaus, Prof. Dr.-Ing.Dr. hc., D-52076 Aachen-Schmithof (DE)
(72) Erfinder: Spies, Klaus, Prof. Dr.-Ing.Dr. hc., D-52076 Aachen-Schmithof (DE)
(74) Vertreter: Spalthoff, Adolf, Dipl.-Ing.

(56) Entgegenhaltungen:
- DE-A- 2 240 136
- DE-U- 8 806 500
- US-A- 2 779 455
- US-A- 3 279 578

## Beschreibung

Die Erfindung betrifft eine Einrichtung zur leitungslosen Überführung von schleuderfähigem Material von einer Aufgabe zu einem Bestimmungsort, insbesondere im untertägigen Bergbau, gemäß dem Oberbegriff des Patentanspruchs 1.

Bei einer Schleudereinrichtung für Schüttgut, wie sie aus der DE-A-2 240 136 bekannt ist, ist eine sich drehende Schleuderscheibe vorgesehen, bei der das zu schleudernde Schüttgut axial auf die Schleuderscheibe aufgegeben wird. Die Schleuderscheibe hat einen nach oben und unten geschlossenen Schleuderraum, aus dem heraus das zu schleudernde Schüttgut in demjenigen Bereich des Umfangs der Schleuderscheibe austritt, an der der Außenrand der Schleuderscheibe nicht durch einen endlos umlaufenden Gehäusegurt geschlossen ist.

Aus der US-A-2 779 455 ist eine derartige Einrichtung bekannt, die der im Oberbegriff von Anspruch 1 berücksichtigten Einrichtung entspricht und bei der bereits ein um eine Achse rotierendes, radial offenes Schleuderrad vorhanden ist. Das Schleuderrad hat Schaufeln, die sich im wesentlichen radial erstrecken. Des weiteren ist bei der bekannten Einrichtung ein Gehäusegurt vorgesehen, der das mit gleicher Geschwindigkeit umlaufende Schleuderrad mantelartig umhüllt. Das Material ist dem Schleuderrad axial zuführbar und radial aus dem Schleuderrad austragbar. Auf der Einströmseite des Schleuderrads sind Mittel zur gerichteten Einschleusung des Materials in die Schaufelebene vorgesehen, und austragsseitig im Bereich des nicht ummantelten Umfangsabschnitts des Schleuderrads Mittel zur strahlförmigen Bündelung des Materials.

Bei der aus der US-A-2 779 455 bekannten Einrichtung wird der Ausströmkegel des Materials aus dem Schleuderrad im wesentlichen allein durch den Zeitpunkt der Ablösung des Materials vom Schleuderrad bzw. dem Ort der Ablösung des Materials vom Schleuderrad bestimmt. Das abgelöste Material kann bei ungünstigen Verhältnissen in einen zwischen dem Schleuderrad und dem dieses antreibenden Gehäusegurt ausgebildeten Zwickel geraten. Hierdurch ergibt sich je nach Art des von der Einrichtung geförderten Materials eine mehr oder weniger große Verschmutzung der Einrichtung, die bereits kurzfristig zu Ausfallzeiten der Einrichtung führen kann.

Der Erfindung liegt die Aufgabe zugrunde, die gattungsgemäße Einrichtung zur leitungslosen Überführung von schleuderfähigem Material von einer Aufgabe zu einem Bestimmungsort derart weiterzubilden, daß Ausfallzeiten und Störungen aufgrund von Verschmutzungen der Einrichtung durch fehlgeleitetes Material zuverlässig vermieden werden.

Diese Aufgabe wird erfindungsgemäß dadurch gelöst, daß der nicht vom Gehäusegurt ummantelte austragsseitige Umfangsabschnitt des Schleuderrads teilweise durch einen Materialabweiser der Mittel zur strahlförmigen Bündelung abgedeckt ist.

Bereits aufgrund der Mittel zur strahlförmigen Bündelung, die auf den das Schleuderrad verlassenden Materialstrom einwirken, wird eine Verschmutzung von radial außerhalb des Schleuderrads angeordneten Einrichtungsteilen weitgehend vermieden.

Jedwede Verschmutzung des Wiederanlagebereichs des Gehäusegurts am Schleuderrad wird durch den Materialabweiser vermieden. Die Innenseite des Materialabweisers ist dabei an die Kontur des Schleuderrads angepaßt und verhindert, daß sich Materialbestandteile im Zwickel zwischen der den Gehäusegurt wieder an das Schleuderrad anlegenden Umlenkrolle und dem Schleuderrad einklemmen und den Gehäusegurt bzw. das Schleuderrad nachhaltig beschädigen können. Auf der dem Schleuderrad abgewandten Seite ist der Materialabweiser vom Umfang des Schleuderrads ausgehend keilförmig gestaltet, um mit seiner Außenseite mit zur Bündelung des Materials beizutragen.

Hierdurch ergibt sich im Zusammenwirken mit den Mitteln zur strahlförmigen Bündelung eine kontrollierte Abströmung des das Schleuderrad verlassenden Materials, mit der Folge, daR eine kontrollierte Aufgabe dieses Materials, z.B. auf ein nachgeschaltetes Fördermittel, ohne großen technischkonstruktiven Aufwand möglich ist.

Eine vorteilhafte Ausführungsform der Erfindung zur Überführung von stückigem und körnigem Material wird in den Merkmalen des Patentanspruchs 2 gesehen. Hierbei befindet sich mithin im Höhenbereich der Schaufeln eine Ausströmöffnung, welche das Material so gerichtet in die Schaufelebene überführt, daß der extrem gefährdete Bereich der Einrichtung, nämlich die Wiederanlage des Gehäusegurts am Umfang des Schleuderrads, von der Materialbeaufschlagung ausgespart wird und nicht von dem aufgegebenen Material schlagartig beansprucht werden kann. Dabei ist die Größe der Ausströmöffnung und ihre Relativlage zu der Umlenkrolle, welche den Gehäusegurt wieder an den Umfang des Schleuderrads anlegt, abhängig von dem Charakter bzw. der Qualität des Materials, von dem materialspezifischen Reibbeiwert des Schleuderrads und von den konstruktionstechnischen Maßen der Einrichtung, insbesondere dem Abstand der Ausströmöffnung zum Umfang des Schleuderrads.

Die Merkmale des Patentanspruchs 3 sind dann mit Vorteil anwendbar, wenn insbesondere flüssig-teigiges Material von einer Aufgabe zu einem Bestimmungsort im freien Wurf überführt werden soll. Dabei kann die Umlenknabe einen im wesentlichen konischen Querschnitt mit konkaver Oberfläche aufweisen. Da die Umlenknabe in den Zuführstutzen hineinragt, wird das Material noch im Zuführstutzen vom Schleuderrad übernommen und weitergeleitet. Dabei kann den Oberkanten der Schaufeln im Eintrittsbereich des Materials in das Schleuderrad eine solche Form gegeben werden, daß die Umleitung des Volumenstroms von der axialen in die radiale Richtung und der Beginn der Beschleunigungsphase des Materials verschleißarm begünstigt werden. Des weiteren ist es vorstellbar, daß auf der Zuführseite des Materials Mischeinrichtungen, die Zufuhr unterstützende Fördereinrichtungen oder auch Zerkleinerungseinrichtungen angeordnet werden, welche vom Material durchströmt werden, bevor dieses in das Schleuderrad eintritt. Die Drehzahl der Förder-, Misch- und Zerkleinerungseinrichtungen kann der des Schleuderrads entsprechen.

Eine vorteilhafte Auführungsform der austragsseitigen Mittel zur strahlförmigen Bündelung kennzeichnen die Merkmale der Patentansprüche 4 und 5. Die Bündelung des austretenden Materials erfolgt entsprechend seiner Austrittsgeschwindigkeit und seiner Beschaffenheit. Dabei wird die Formgebung der in der Ebene des Schleuderrads liegenden Seitenflächen des Stutzens und ihre gegenseitige Zuordnung so gewählt, daß möglichst keine Berührung mit dem Material erfolgt. Dies ist insbesondere bei körnigem Material oder Stoffen, die körnige Anteile enthalten, wichtig, damit die Körner beim Austritt die Seitenflächen möglichst gar nicht oder nur selten berühren, da Reflektionen zu einer Auffächerung des gebündelten Strahls führen würden. Der Stutzen ist im Bereich des Umfangs des Schleuderrads so ausgebildet, daß auch hier Materialbestandteile, welche nicht durch den Stutzen austreten, einwandfrei gerichtet in das Schleuderrad zurückgeführt werden und nicht in dem gefährdeten Zwickel zwischen dem sich wieder an das Schleuderrad anlegenden Gehäusegurt und dem Schleuderrad gelangen können.

Zur weiteren Verbesserung der austragsseitigen strahlförmigen Bündelung können die Merkmale des Patentanspruchs 6 herangezogen werden.

Eine weitere Ausführungsform der austragsseitigen Mittel zur strahlförmigen Bündelung besteht in den Merkmalen des Patentanspruchs 7. Hierbei liegen sich also mit dem auszutragenden Material bewegende Flächen einander gegenüber, welche weitgehend eine Reibung zwischen dem Material und dem Gehäusegurt bzw. dem Bündelungsgurt vermeiden. Auch können selbst bei körnigem Material keine die Auffächerung fördernden Stoßvorgänge mehr auftreten. Dabei ist es durchaus denkbar, daß der sich tangential zum Umfang des Schleuderrads erstreckende Längenabschnitt des Gehäusegurts alleine oder gemeinsam mit dem Bündelungsgurt eingesetzt werden kann.

Die Merkmale des Patentanspruchs 8 dienen der Verbesserung der Bündelungswirkung.

Des weiteren kann es zur optimalen Anpassung des Bündelungseffekts an das durchzusetzende Material möglich sein, die mündungsseitig der sich gegenüberliegenden Längenabschnitte befindlichen Umlenkrollen des Gehäusegurts und des Bündelungsgurts gemäß Patentanspruch 9 quer verlagerbar zu gestalten. Auf diese Weise kann für jeden Anwendungsfall die relative Lage des Gehäusegurts und des Bündelungsgurts optimal eingestellt werden.

Der Antrieb des Schleuderrads erfolgt gemäß den Merkmalen des Patentanspruchs 10 bevorzugt über einen Riementrieb von einem Antriebsmotor aus. Danach ist der Gehäusegurt nicht selber angetrieben, sondern wird über das Schleuderrad mitgenommen. Entsprechende Spannmittel sorgen für die ordnungsgemäße schlupffreie Anlage des Gehäusegurts am Schleuderrad.

Dennoch kann es unter gewissen betrieblichen Umständen gemäß Patentanspruch 11 sinnvoll sein, auch mindestens eine der Umlenkrollen für den Gehäusegurt motorisch anzutreiben. Der Antrieb des Gehäusegurts dient der Vermeidung eines Schlupfs zwischen dem Gehäusegurt und dem Schleuderrad.

Die Antriebe für das Schleuderrad und/oder den Gehäusegurt können elektrischer, pneumatischer oder hydraulischer Natur sein.

Zur Erhöhung der Lebensdauer des Gehäusegurts kann es entsprechend den Merkmalen des Patentanspruchs 12 zweckmäßig sein, den Gehäusegurt auf der dem Schleuderrad zugewandten Seite mit einem Verschleißschutz zu versehen.

Da nach längerer Betriebszeit am Schleuderrad mit Verschleiß gerechnet werden muß, der zu unregelmäßigem Materialabtrag und damit bei hohen Rotationsgeschwindigkeiten des Schleuderrads zu Massenkräften führt, die als Unwucht in Erscheinung treten, können an wenigstens einer Lagerstelle des Schleuderrads Sensoren angeordnet werden, die aus möglicherweise entstehender Massenunwucht des schnell rotierenden Schleuderrads resultierende Kräfte ermitteln. Die Meßwerte der Unwuchtsensoren können dann in Verstellimpulse zur Beseitigung der Unwucht durch mindestens eine am Schleuderrad angebrachte Massenausgleichseinrichtung umgewandelt werden.

Die erfindungsgemäße Einrichtung zur leitungslosen Überführung von schleuderfähigem Material von einer Aufgabe zu einem Bestimmungsort ist in vielen Bereichen mit Vorteil einsetzbar. Ein Bereich ist der untertägige Bergbau, und zwar insbesondere die Verfüllung der bei und für die Gewinnung von Wertmineralien notwendigermaßen entstehenden Hohlräume. Beispiele dafür sind die Verfüllung der im Streb entstandenen Hohlräume beim Langfrontbau sowie der Begleitstrecken und die Verfüllung von Kammern beim Örterpfeilerbau. Die Erfindung kann aber auch zur Herstellung von Streckenbegleitdämmen, zur Aufbringung von haftendem Material auf Oberflächen oder zur Umlagerung von aufgehaldetem Material an einen anderen Standort benutzt werden. Des weiteren kann die Einrichtung in der Deponietechnik, bei der Be- und Entladung von Güterwaggons und Schiffen eingesetzt werden. Auch zur Einbringung von Spritzbeton sind solche Einrichtungen einsetzbar. Weiterhin ist es möglich, die Einrichtung als Nachbeschleuniger von hydraulisch gefördertem bzw. gepumptem Feststoff anzuwenden. Darüber hinaus ist es denkbar, daR eine solche Einrichtung bei Flächenbränden eingesetzt werden kann. Dort hat es sich als vorteilhaft erwiesen, feste körnige oder granulierte Löschmittel zu benutzen, die in den Flächenbrand hineingeschleudert werden und dort bei Erhitzung Gase entwickeln, welche die Flammen ersticken. Letztlich ist es vorstellbar, daß die Einrichtung bei Massengutumschlag sowie in der Landwirtschaft in verstärktem Maße eingesetzt werden kann.

Die Erfindung ist nachfolgend anhand von in den Zeichnungen dargestellten Ausführungsbeispielen näher erläutert. Es zeigen:
- Figur 1: in der Perspektive, teilweise im Schnitt, eine erfindungsgemäße Einrichtung zur leitungslosen Überführung von schleuderfähigem Material von einer Aufgabe zu einem Bestimmungsort;
- Figur 2: im Grundriß den Einsatz der Einrichtung gemäß Figur 1 in einem Streb des untertägigen Bergbaus;
- Figur 3: ein Schleuderrad der Einrichtung gemäß Figur 1 im perspektivischen Detail;
- Figur 4: in der Seitenansicht einen Zuführstutzen für das Schleuderrad der Figur 3;
- Figur 5: einen horizontalen Querschnitt durch die Darstellung der Figur 4 entlang der Linie V-V;
- Figur 6: im vertikalen Querschnitt eine weitere Ausführungsform der Einrichtung gemäß Figur 1;
- Figur 7: in schematischer Draufsicht eine dritte Ausführungsform der Einrichtung gemäß Figur 1;
- Figur 8: in schematischer Draufsicht eine vierte Ausführungsform der Einrichtung gemäß Figur 1; und
- Figur 9: in schematischer Draufsicht eine fünfte Ausführungsform der Einrichtung gemaß Figur 1.

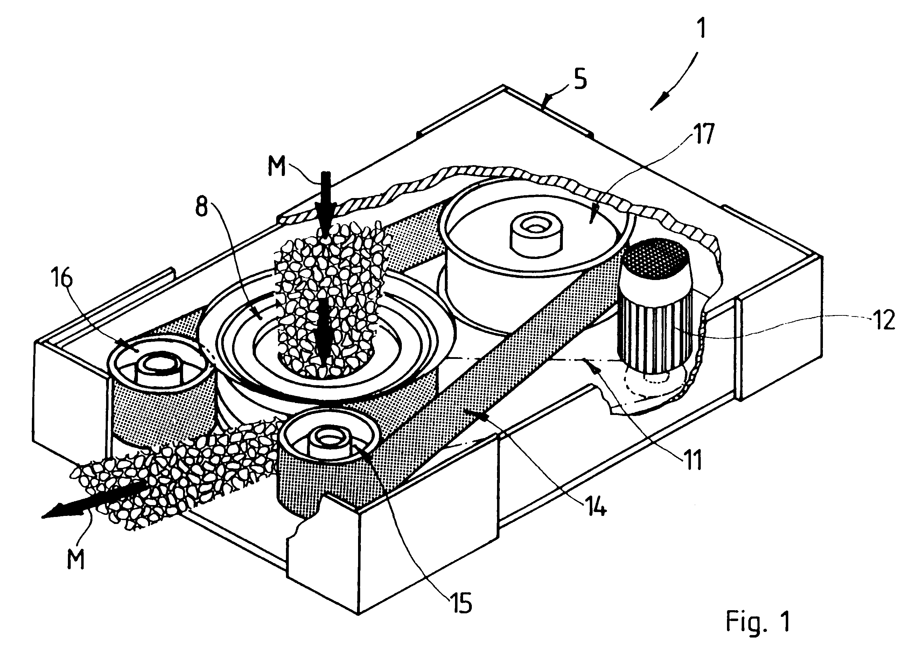

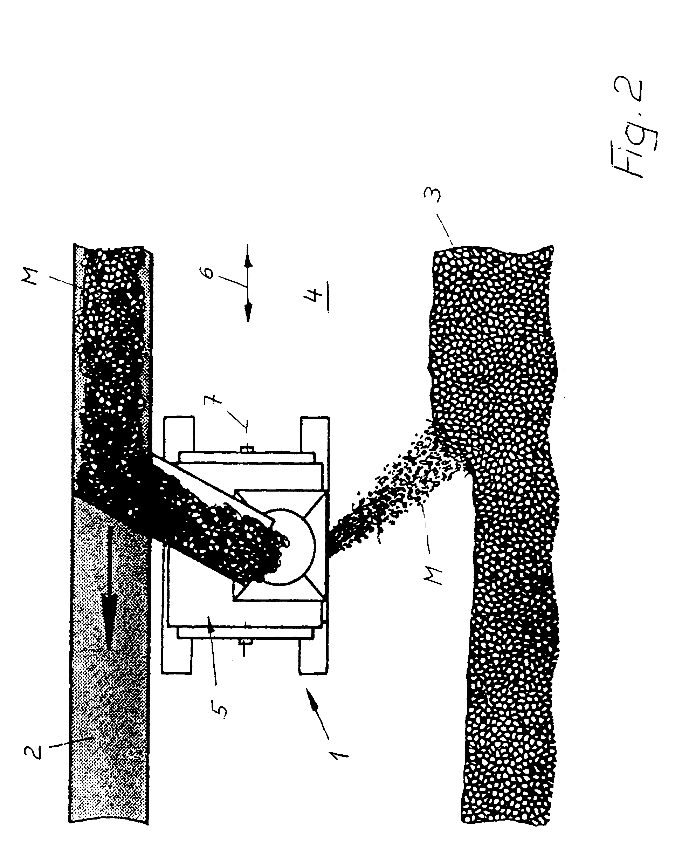

Mit 1 ist in den Figuren 1 und 2 eine Einrichtung zur leitungslosen Überführung von schleuderfähigem körnigem Material M von einer Aufgabe 2 zu einem Bestimmungsort 3 bezeichnet. Nach Figur 2 können die Aufgabe beispielsweise ein Förderband 2 und der Bestimmungsort der Versatzbereich 3 eines Strebs 4 sein.

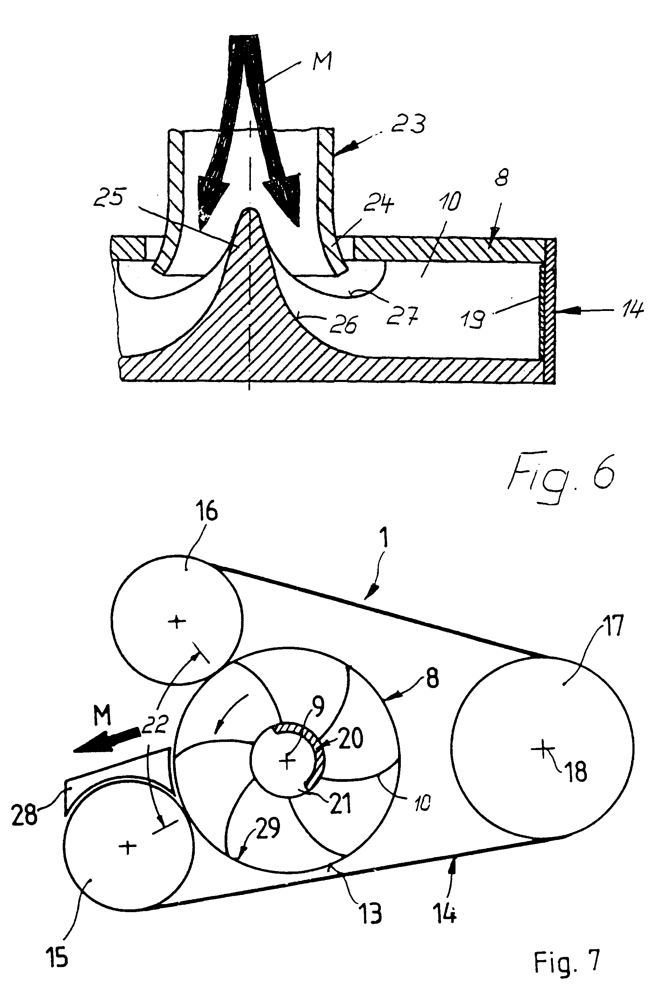

Die Einrichtung 1 umfaßt ein Gehäuse 5, das gemäß dem Doppelpfeil 6 in Figur 2 in Längsrichtung des Strebs 4 verlagerbar und auch um eine Achse 7 verschwenkbar ist. In dem Gehäuse 5, siehe auch Figur 7, ist ein Schleuderrad 8 um eine Achse 9 drehbar angeordnet. Das Schleuderrad 8 ist radial offen und besitzt in Drehrichtung konkav gekrümmte Schaufeln 10. Wie Figur 1 ferner zeigt, ist das Schleuderrad 8 über einen Riementrieb 11 durch einen Elektromotor 12 angetrieben, der ebenfalls in dem Gehäuse 5 angeordnet ist.

Auf dem überwiegenden Teil seines Umfangs 13 (Figuren 1 und 7) ist das Schleuderrad 8 von einem endlosen Gehäusegurt 14 mantelartig umhüllt. Der Gehäusegurt 14 umschlingt darüber hinaus insgesamt drei Umlenkrollen 15, 16, 17, wobei die Umlenkrolle 15 den Gehäusegurt 14 an den Umfang 13 des Schleuderrads 8 anlegt und die Umlenkrolle 16 den Gehäusegurt 14 vom Schleuderrad 8 abhebt. Die dritte Umlenkrolle 17 kann mit ihrer Achse 18 relativ verlagerbar sein, um den Gehäusegurt 14 spannen zu können.

Wie die Figur 6 erkennen läßt, ist es außerdem möglich, den Gehäusegurt 14 auf der dem Schleuderrad 8 zugewandten Seite mit einem Verschleißschutz 19 zu versehen.

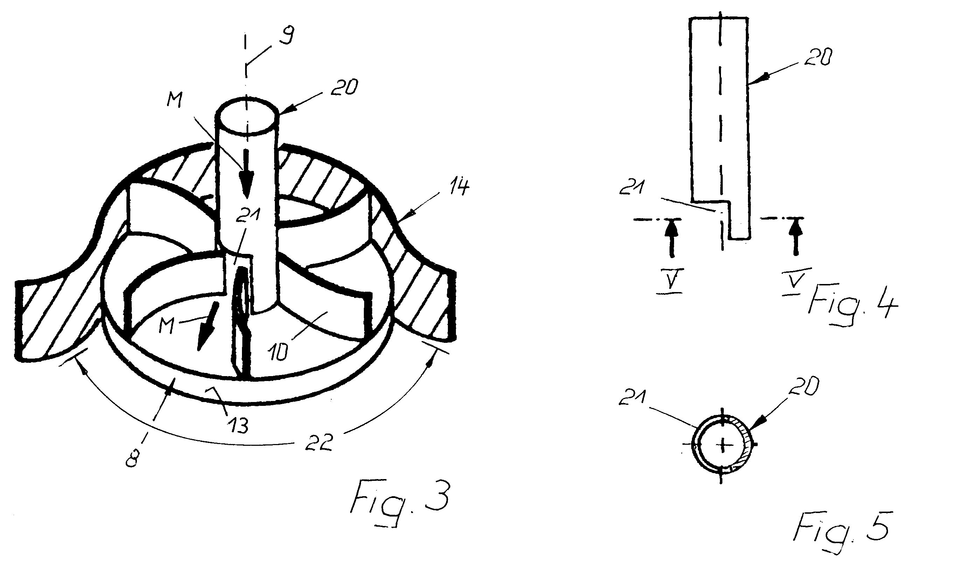

Bei gemeinsamer Betrachtung der Ausführungsform der Figuren 1 und 3 bis 5, welche bevorzugt zur Überführung von stückigem oder körnigem Material M dient, ist zu erkennen, daß in das Schleuderrad 8 ein zylindrischer Zuführstutzen 20 mündet, der in dem Gehäuse 5 festgelegt ist und zu dem sich das Schleuderrad 8 relativ bewegen kann. Im Höhenbereich der Schaufeln 10 ist der Zuführstutzen 20 mit einer radial gerichteten Ausströmöffnung 21 versehen, über die das Material M aus dem Zuführstutzen 20 in das Schleuderrad 8 übertritt. Die Größe und Relativlage der Ausströmöffnung 21 zu dem vom Gehäusegurt 14 nicht ummantelten Umfangsabschnitt 22 des Schleuderrads 8 (siehe auch Figur 7) ist abhängig von dem zu überführenden Material M, dem Abstand des Zuführstutzens 20 vom Umfang 13 des Schleuderrads 8 sowie vom materialspezifischen Reibbeiwert des Schleuderrads 8.

Die Ausführungsform der Figur 6 zeigt einen axial in das Schleuderrad 8 mündenden, nicht drehenden Zuführstutzen 23, der am Eintritt in das Schleuderrad 8 radial aufgeweitet ist. In den aufgeweiteten Stutzenabschnitt 24 ragt eine zentrale Umlenknabe 25 des Schleuderrads 8. Diese im wesentlichen konisch gestaltete Umlenknabe 25 besitzt eine konkave Oberfläche 26.

Des weiteren sind die Oberkanten 27 der Schaufeln 10 im Eintrittsbereich des Materials M in das Schleuderrad 8 so gestaltet, daß ein möglichst geringer Verschleiß eintreten kann. Diese Ausführungsform eignet sich bevorzugt für flüssig-teigiges Material M.

Aus der Figur 7 ist zu erkennen, daß der nicht vom Gehäusegurt 14 ummantelte austragsseitige Umfangsabschnitt 22 des Schleuderrads 8 teilweise durch einen Materialabweiser 28 abgedeckt ist. Dieser Materialabweiser 28 verhindert, daß Bestandteile des Materials M in dem Zwickel 29 zwischen der den Gehäusegurt 14 wieder an das Schleuderrad 8 anlegenden Umlenkrolle 15 und dem Schleuderrad 8 eingeklemmt werden können.

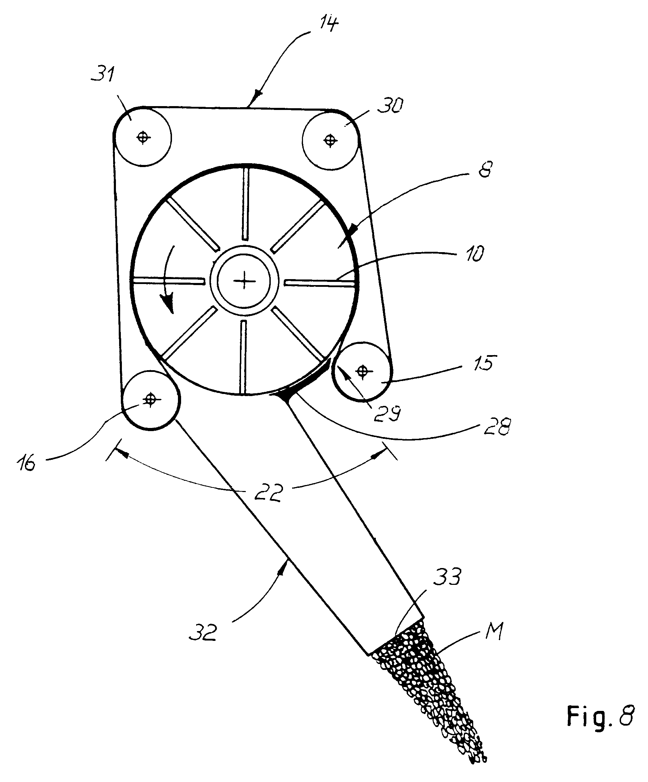

Bei der Ausführungsform der Figur 8, welche beispielsweise vier Umlenkrollen 15, 16, 30, 31 für den Gehäusegurt 14 aufweist (das Gehäuse selber ist nicht dargestellt), ist ein sich an den nicht ummantelten und seitlich von den Umlenkrollen 15, 16 begrenzten Umfangsabschnitt 22 annähernd tangential anschließender Stutzen 32 als austragsseitiges Mittel zur strahlförmigen Bündelung vorgesehen. Der Stutzen 32 verjüngt sich zur Austragsmündung 33 hin konisch. Der Zwickel 29 ist wieder durch den Materialabweiser 28 abgedeckt.

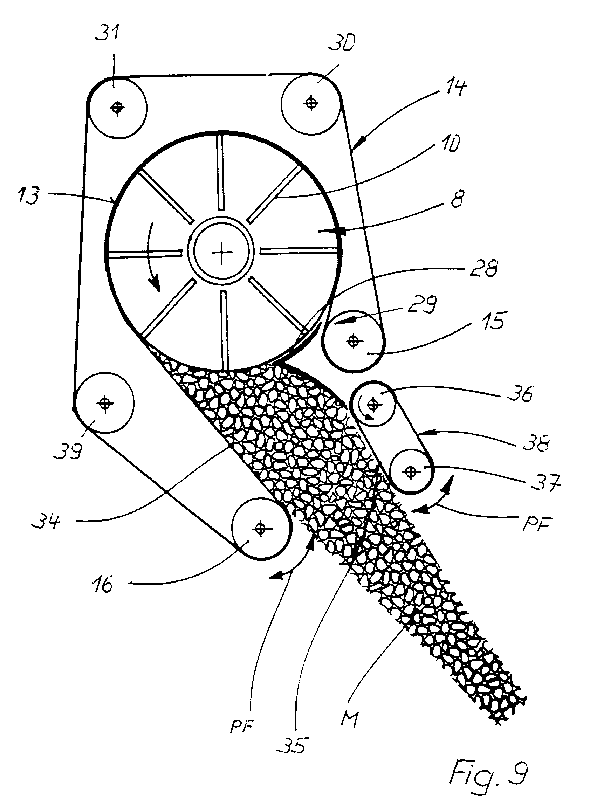

Im Rahmen der Ausführungsform der Figur 9 sind die austragsseitigen Mittel zur strahlförmigen Bündelung durch einen sich tangential zum Umfang 13 des Schleuderrads 8 erstreckenden Längenabschnitt 34 des Gehäusegurts 14 sowie durch einen diesem Längenabschnitt 34 frontal gegenüberliegenden Längenabschnitt 35 eines über Umlenkrollen 36, 37 endlos umlaufenden Bündelungsgurts 38 gebildet. Der Gehäusegurt 14 ist hierbei über insgesamt fünf Umlenkrollen 15, 16, 30, 31, 39 geführt. Die Umlenkrollen 36, 37 für den Bündelungsgurt 38 sind einzeln oder gemeinsam so angetrieben, daß die beiden Längenabschnitte 34, 35 sich mit dem Material M bewegen. Auch bei dieser Ausführungsform ist der Zwickel 29 durch den Materialabweiser 28 abgedeckt.

Es ist aus der Figur 9 noch zu erkennen, daß die sich gegenüberliegenden Längenabschnitte 34, 35 des Gehäusegurts 14 und des Bündelungsgurts 38 im Winkel zueinander verlaufen. Die mündungsseitig der sich gegenüberliegenden Längenabschnitte 34, 35 befindlichen Umlenkrollen 16, 37 des Gehäusegurts 14 und des Bündelungsgurts 38 können entsprechend den Pfeilen PF quer verlagerbar sein.

Bei den Ausführungsformen der Figuren 8 und 9 sind die Schaufeln 10 der Schleuderräder 8 geradlinig radial ausgerichtet. Der Antrieb der Schleuderräder 8 und der Gehäusegurte 14 erfolgt analog zu der Ausführungsform der Figur 1. Derselbe Sachverhalt trifft für die Darstellung der Figur 7 zu.

## Patentansprüche

1. Einrichtung zur leitungslosen Überführung von schleuderfähigem Material (M) von einer Aufgabe (2) zu einem Bestimmungsort (3), insbesondere im untertägigen Bergbau, welche ein um eine Achse (9) rotierendes, radial offenes Schleuderrad (8) mit sich im wesentlichen radial erstreckenden Schaufeln (10) und einen Gehäusegurt (14) aufweist, wobei das Material (M) dem Schleuderrad (8) axial zuführbar und radial aus dem Schleuderrad (8) austragbar ist, das auf dem überwiegenden Teil seines Umfangs (13) von dem mit gleicher Geschwindigkeit umlaufenden endlosen Gehäusegurt (14) mantelartig umhüllt ist, und wobei einströmseitig des Schleuderrads (8) Mittel (20, 21) zur gerichteten Einschleusung des Materials (M) in die Schaufelebene und austragsseitig im Bereich des nicht ummantelten Umfangsabschnitts (22) des Schleuderrads (8) Mittel (28, 32; 34, 35) zur strahlförmigen Bündelung des Materials (M) vorgesehen sind, dadurch gekennzeichnet, daß der nicht vom Gehäusegurt (14) ummantelte austragsseitige Umfangsabschnitt (22) des Schleuderrads (8) teilweise durch einen Materialabweiser (28) der Mittel zur strahlförmigen Bündelung abgedeckt ist.

2. Einrichtung nach Anspruch 1, bei der die einströmseitigen Mittel zur gerichteten Einschleusung durch einen axial in das Schleuderrad (8) mündenden, nicht drehenden Zuführstutzen (20) mit einer im Höhenbereich der Schaufeln (10) befindlichen radial gerichteten Ausströmöffnung (21) gebildet sind.

3. Einrichtung nach Anspruch 1, bei der ein axial in das Schleuderrad (8) mündender, nicht drehender Zuführstutzen (23) am Eintritt in das Schleuderrad (8) radial aufgeweitet ist und in den aufgeweiteten Stutzenabschnitt (24) eine zentrale Umlenknabe (25) des Schleuderrads (8) hineinragt.

4. Einrichtung nach Anspruch 1, bei der die austragsseitigen Mittel zur strahlförmigen Bündelung durch einen sich an den nicht ummantelten und seitlich von zwei Umlenkrollen (15, 16) des Gehäusegurts (14) begrenzten Umfangsabschnitt (22) annähernd tangential anschließenden Stutzen (32) gebildet sind.

5. Einrichtung nach Anspruch 4, bei der der Stutzen (32) rohrartig ausgebildet ist.

6. Einrichtung nach Anspruch 4 oder 5, bei der der Stutzen (32) zu seiner Austragsmündung (33) hin sich konisch verjüngend ausgebildet ist.

7. Einrichtung nach Anspruch 1, bei der die austragsseitigen Mittel zur strahlförmigen Bündelung durch einen sich tangential zum Umfang (13) des Schleuderrads (8) erstreckenden Längenabschnitt (34) des Gehäusegurts (14) sowie durch einen diesem Längenabschnitt (34) frontal gegenüberliegenden Längenabschnitt (35) eines über Umlenkrollen (36, 37) endlos umlaufenden Bündelungsgurts (38) gebildet sind.

8. Einrichtung nach Anspruch 7, bei der die sich gegenüberliegenden Längenabschnitte (34, 35) des Gehäusegurts (14) und des Bündelungsgurts (38) im Winkel zueinander verlaufen.

9. Einrichtung nach Anspruch 7 oder 8, bei der die mündungsseitig der sich gegenüberliegenden Längenabschnitte (34, 35) befindlichen Umlenkrollen (16, 37) des Gehäusegurts (14) und des Bündelungsgurts (38) querverlagerbar sind.

10. Einrichtung nach einem der Ansprüche 1 bis 9, bei der das Schleuderrad (8) und der mitnahmeschlüssig an diesem anliegende Gehäusegurt (14) über einen Riementrieb (11) von einem neben dem Schleuderrad (8) und neben dem Gehäusegurt (14) angeordneten Motor (12) aus angetrieben sind.

11. Einrichtung nach einem der Ansprüche 1 bis 10, bei der mindestens eine der Umlenkrollen (15, 16, 17, 30, 31, 39) für den Gehäusegurt (14) angetrieben ist.

12. Einrichtung nach einem der Ansprüche 1 bis 11, bei der der Gehäusegurt (14) auf der dem Schleuderrad (8) zugewandten Seite mit einem Verschleißschutz (19) versehen ist.

## Claims

1. Device for the ductless transfer from a delivery (2) to a destination (3) of material (M) which can be thrown, particularly in underground mining, comprising a radially-open spinner (8) rotating about an axis (9) and having blades (10) extending substantially radially and an enclosing belt (14), in which the material (M) can be supplied axially to the spinner (8) and can be discharged radially from the spinner (8) which is enveloped in a casing-like manner on the predominant portion of its perimeter (13) by the endless enclosing belt (14) which circulates at the same speed, and in which means (20, 21) are provided on the inlet side of the spinner (8) for the directional inward transfer of the material (M) into the plane of the blades and means (28, 32; 34, 35) are provided on the discharge side, in the region of the uncovered portion of the perimeter (22) of the spinner (8), for concentrating the material (M) into a stream, characterized in that the portion (22) of the perimeter of the spinner (8) which is not covered by the enclosing belt (14) on the discharge side is partially covered by a material deflector (28) of the means for concentrating the material into a stream.

2. Device according to Claim 1 in which the directional inward transfer means on the inlet side are formed by a feed pipe (20) which opens axially into the spinner (8) and does not rotate, and which has a radially-directed outlet opening (21) disposed at the level of the blades (10).

3. Device according to Claim 1 in which a feed pipe (23) which opens axially into the spinner (8) and does not rotate is flared radially at the entry to the spinner (8) and a central deflection boss (25) of the spinner (8) projects into the flared portion (24) of the pipe.

4. Device according to Claim 1 in which the means on the discharge side for concentrating the material into a stream are formed by a nozzle (32) connected approximately tangentially to the uncovered perimeter portion (22) which is defined laterally by two deflection rollers (15, 16) of the enclosing belt (14).

5. Device according to Claim 4 in which the nozzle (32) is tubular.

6. Device according to Claim 4 or Claim 5 in which the nozzle (32) is tapered inwardly towards its outlet (33).

7. Device according to Claim 1 in which the means on the discharge side for concentrating the material into a stream are formed by a linear portion (34) of the enclosing belt (14) which extends tangentially to the perimeter (13) of the spinner (8) as well as by a linear portion (35) of an endless concentration belt (38) circulating over deflection rollers (36, 37) and disposed opposite and facing this linear portion (34).

8. Device according to Claim 7 in which the opposed linear portions (34, 35) of the enclosing belt (14) and of the concentration belt (38) run at an angle to one another.

9. Device according to Claim 7 or Claim 8 in which the deflection rollers (16, 37) disposed at the outlet ends of the opposed linear portions (34, 35) of the enclosing belt (14) and of the concentration belt (38) can be displaced transversely.

10. Device according to any one of Claims 1 to 9 in which the spinner (8) and the enclosing belt (14) which fits closely for entrainment thereon are driven, by means of a belt drive (11), by a motor (12) disposed close to the spinner (8) and close to the enclosing belt (14).

11. Device according to any one of Claims 1 to 10 in which at least one of the deflection rollers (15, 16, 17, 30, 31, 39) for the enclosing belt (14) is driven.

12. Device according to any one of Claims 1 to 11, in which the enclosing belt (14) is provided with wear protection (19) on its side facing the spinner (8).

## Revendications

1. Dispositif pour transférer sans conduits, d'un point d'alimentation (2) vers un point de destination (3), un produit (M) en vrac pouvant être projeté par centrifugation, notamment dans les mines soutertaines, lequel dispositif comporte une turbine centrifugeuse (8) ouverte radialement qui tourne autour d'un axe (9) et est pourvue d'aubes (10) sensiblement radiales ainsi qu'une courroie-carter (14), le produit (M) étant amené axialement dans la turbine centrifugeuse (8) et sortant radialement de ladite turbine centrifugeuse (8) dont la majeure partie de la circonférence (13) est entourée par la courroie-carter (14) sans fin qui forme une sorte d'enveloppe et se déplace à la même vitesse, des moyens (20, 21) étant prévus côté entrée de la turbine centrifugeuse (8) pour admettre en l'orientant le produit (M) dans le plan des aubes et des moyens (28, 32; 34, 35) étant prévus côté sortie dans la région du segment de circonférence (22) non fermé de la turbine centrifugeuse (8) aux fins de concentrer sous forme de jet le produit (M), caractérisé par le fait que le segment de circonférence (22) de la turbine centrifugeuse (8) qui n'est pas entouré par la courroie-carter (14) est partiellement recouvert par un déflecteur (28) de produit faisant partie des moyens de concentration en jet.

2. Dispositif selon la revendication 1, dans lequel les moyens prévus côté entrée pour admettre en l'orientant le produit sont constitués par un conduit d'entrée (20) fixe en rotation qui débouche axialement dans la turbine centrifugeuse (8) et présente une ouverture de sortie (21) dirigée radialement située au niveau des aubes (10).

3. Dispositif selon la revendication 1, dans lequel un conduit d'entrée (23) fixe en rotation qui débouche axialement dans la turbine centrifugeuse (8) est évasé radialement dans la région de son entrée dans la turbine centrifugeuse (8) et un moyeu déflecteur (25) de la turbine centrifugeuse (8) pénètre dans le partie de conduit (24) évasée.

4. Dispositif selon la revendication 1 dans lequel les moyens assurant la concentration sous forme de jet côté sortie sont constitués par un conduit (32) qui se raccorde sensiblement tangentiellement au segment de circonférence (22) non fermé qui est délimité latéralement par deux galets de renvoi (15, 16) de la courroie-carter (14).

5. Dispositif selon la revendication 4, dans lequel le conduit (32) est agencé sous forme de tube.

6. Dispositif selon la revendication 4 ou la revendication 5, dans lequel le conduit (32) se rétrécit en forme de cône en direction de sa sortie (33).

7. Dispositif selon la revendication 1, dans lequel les moyens assurant la concentration sous forme de jet du produit, côté sortie, sont constitués par un tronçon (34) de la courroie-carter (14) qui s'étend tangentiellement à la périphérie (13) de la turbine centrifugeuse et par un tronçon (35) d'une courroie (38) sans fin de concentration qui est disposée côté frontal en vis-à-vis dudit tronçon (34) et circule sur des galets de renvoi (36, 37).

8. Dispositif selon la revendication 7, dans lequel les tronçons (34, 35) en vis-à-vis de la courroie-carter (14) et de la courroie de concentration (38) forment un angle entre eux.

9. Dispositif selon la revendication 7 ou la revendication 8, dans lequel les galets de renvoi (16, 37) de la courroie-carter (14) et de la courroie de concentration (38) situés côté embouchure des tronçons de courroie (34, 35) en vis-à-vis peuvent être déplacés transversalement.

10. Dispositif selon l'une des revendications 1 à 9, dans lequel la turbine centrifugeuse (8) et la courroie-carter (14) appliquée contre ladite turbine de manière à être entraînée par celle-ci sont entraînées par l'intermédiaire d'un mécanisme d'entraînement à courroie (11) par un moteur (12) qui est disposé à proximité de la turbine centrifugeuse (8) et de la courroie-carter (14).

11. Dispositif selon l'une des revendications 1 à 10, dans lequel l'un des galets de renvoi (15, 16, 17, 30, 31, 39) de la courroie-carter (14) est entraîné.

12. Dispositif selon l'une des revendications 1 à 11, dans lequel la courroie-carter (14), sur sa face tournée vers la turbine centrifugeuse (8), est pourvue d'une protection (19) contre l'usure.
